## Europäisches Patentamt
## European Patent Office
## Office européen des brevets

(11) Veröffentlichungsnummer: **0 237 860**
**B1**

(12) **EUROPÄISCHE PATENTSCHRIFT**

(45) Veröffentlichungstag der Patentschrift: 29.08.90

(51) Int. Cl.⁵: **C 01 B 21/068**

(21) Anmeldenummer: 87102914.6

(22) Anmeldetag: 02.03.87

(54) Verfahren zur Herstellung von kohlenstoffarmem Siliciumnitrid.

(30) Priorität: 13.03.86 DE 3608352

(43) Veröffentlichungstag der Anmeldung:
23.09.87 Patentblatt 87/39

(45) Bekanntmachung des Hinweises auf die
Patenterteilung:
29.08.90 Patentblatt 90/35

(84) Benannte Vertragsstaaten:
DE FR GB NL SE

(56) Entgegenhaltungen:
DE-A-2 814 235

CHEMICAL ABSTRACTS, Band 98, Nr. 8, 21.
Februar 1983, Seite 140, Zusammenfassung Nr.
56550v, Columbus, Ohio, US; & JP-A-57 135 704
(UBE INDUSTRIES LTD) 21-08-1982

CHEMICAL ABSTRACTS, Band 104, Nr. 4, 27.
Januar 1986, Seite 110, Zusammenfassung Nr.
21424x, Columbus, Ohio, US; & JP-A-60 112 607
(DENKI KAGAKU KOGYO) 19.06.185; & JP-A-83
216 031 (Kat. D)

(73) Patentinhaber: BAYER AG
D-5090 Leverkusen 1 Bayerwerk (DE)

(72) Erfinder: Schönfelder, Lothar, Dr.
Friedensstrasse 235
D-4150 Krefeld 11 (DE)
Erfinder: Franz, Gerhard, Dr.
Erich-Klausener-Strasse 44
D-4150 Krefeld 1 (DE)

(56) References cited:
CHEMICAL ABSTRACTS, Band 100, Nr. 26, 25.
Juni 1984, Seite 140, Zusammenfassung Nr.
212472p, Columbus, Ohio, US; & JP-A-59 35 008
(ONODA CEMENT CO. LTD) 25-02-1984

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die vorliegende Erfindung betrifft ein Verfahren zur Herstellung von Siliciumnitridpulver mit einem geringen Kohlenstoffgehalt durch Behandlung von Siliciumnitridpulver in chlorgashaltiger Atmosphäre.

Siliciumnitrid ist als Rohstoff für keramische Werkstoffe interessant, die potentionelle Substituenten für metallische Werkstoffe in vielen Bereichen des hochbeanspruchten Maschinen- und Apparatebaus sind. Von diesen Materialien wird eine sehr gute Beständigkeit gegen hohe Temperaturen, Temperaturschocks und Korrosion in einem weiten Temperaturbereich gefordert.

Für die Herstellung derartiger keramischer Werkstoffe können die verwendeten $Si_3N_4$-Pulver nach verschiedenen chemischen Verfahren hergestellt werden. Von den technisch bereits angewandten Verfahren zur Herstellung von $Si_3N_4$-Pulver sind aufgrund der kostengünstigen und gut verfügbaren Rohstoffbasis das Verfahren der carbothermischen Nitridierung von $SiO_2$ (1) und das Verfahren der Direktnitridierung von Silicium (2) von Bedeutung,

(1)  $3\,SiO_2 + 6\,C + 2\,N_2 \rightarrow Si_3N_4 + 6\,CO$

(2)  $3\,Si + 2\,N_2 \rightarrow Si_3N_4$

Die thermischen und mechanischen Eigenschaften von Werkstoffen auf $Si_3N_4$-Basis werden in hohem Maße von der Art der eingesetzten $Si_3N_4$-Pulver beeinflußt, insbesondere von den darin enthaltenen metallischen und nichtmetallischen Verunreinigungen. Bei den nichtmetallischen Verunreinigungen ist neben Sauerstoff der Gehalt an Kohlenstoff von zentraler Bedeutung.

Bei dem Verfahren (1), der carbothermischen Nitridierung von $SiO_2$ mit kohlenstoff in einer stickstoffhaltigen Atmosphäre, ist das Reaktionsprodukt mit Kohlenstoff verunreinigt. Der Gehalt an Kohlenstoff wird dabei vor allem durch die angewandten Reaktionsbedingungen bestimmt.

In der DE—A—2814235 wird ein Verfahren zur Herstellung von α-$Si_3N_4$-Pulver durch carbothermische Nitridierung von $SiO_2$ beschrieben. Zur Entkohlung wird das gebildete $Si_3N_4$-Pulver in einer oxidierenden Atmosphäre auf eine Temperatur von 600° bis 800°C erwämt. Selbst nach dieser Behandlung enthält das $Si_3N_4$-Pulver jedoch noch Kohlenstoff in Form von SiC (siehe Tabelle 1). Diese rein oxidative Behandlung ist nicht ausreichend für eine Reduktion des Kohlenstoffgehaltes.

Bei dem Verfahren der Direktnitridierung von Silicium wird Kohlenstoff durch Verunreinigungen im Rohstoff, kohlenstoffhaltige Bindemittel oder Verunreinigungen der Reaktionsatmosphäre, wie z.B. in den verwendeten Hochtemperatur-Nitrieröfen mit einer Graphitheizung, in das $Si_3N_4$-Pulver eingeschleppt.

Mit Kohlenstoff verunreinigte $Si_3N_4$-Pulver besitzen jedoch schlechtere Sintereigenschaften, so daß die Sinterdichten durch den Kohlenstoff nachteilig beeinflußt werden (H. Hausner, R. Peitzsch in: Keramische Komponenten (für Fahrzeug-Gasturbinen III, Statusseminar im Auftrag des Bundesministeriums für Forschung und Technologie, 44—54, Springer Verlag, Berlin, 1984).

Neben dem negativen Einfluß auf das Sinterverhalten des $Si_3N_4$-Pulvers führt eine Verunreinigung mit Kohlenstoff außerdem zu einer stark verminderten Hochtemperatur-Oxidationsbeständigkeit von $Si_3N_4$-Werkstoffen, wodurch solche Materialien für einen Einsatz bei hohen Temperaturen nicht geeignet sind (H. Knoch, G. E. Gazza Journal of the American Ceramic Society 62 (11—12), 634—35, 1979).

Verfahren, bei denen $Si_3N_4$-Pulver aus hochreinen Verbindungen wie $SiH_4$ oder $SiCl_4$ hergestellt werden, können zwar zu den gewünschten kohlenstoffarmen Produkten führen. Die $Si_3N_4$-Pulver aus diesen Verfahren besitzen jedoch den schwerwiegenden Nachteil, daß beim Verpressen der Pulver nur Materialien mit geringen Gründichten erreicht werden und die nachfolgende Sinterung zu unverhältnismäßig hohen Schwindungen führt.

Aus der japanischen Patentanmeldung 216 031/83 ist ein Verfahren zur Nachbehandlung von $Si_3N_4$-Pulver, welches durch Direktnitridierung von Silicium hergestellt wird, bekannt. Dabei wird das $Si_3N_4$-Pulver bei Temperaturen über 1100°C, bevorzugt 1300°C, in einer Chlorgasatmosphäre behandelt. Anschließend erfolgt eine Glühung in einer stickstoffhaltigen Atmosphäre bei Temperaturen oberhalb 1200°C, bevorzugt 1500°C. Unter diesen Bedingungen soll eine Reduzierung des Kohlenstoffes erreicht werden. Dieses Verfahren besitzt den Nachteil, daß dabei bei sehr hohen Temperaturen in aggressiven Gasatmosphären, wie Chlor, gearbeitet werden muß, so daß an die dabei eingesetzten Öfen hohe technische Anforderungen gestellt werden.

Die Aufgabe der vorliegenden Erfindung bestand deshalb darin, ein Verfahren zur Nachbehandlung von $Si_3N_4$-Pulver zur Reduzierung des Kohlenstoffgehaltes zu entwickeln, das die Nachteile der dem bekannten Stand der Technik angehörenden Verfahren nicht aufweist.

Überraschenderweise wurde gefunden, daß $Si_3N_4$-Pulver mit einem niedrigen Kohlenstoffgehalt nach dem Verfahren der carbothermischen Nitridierung oder der Direktnitridierung von Silicium hergestellt werden können, wenn die dabei erhaltenen $Si_3N_4$-Pulver einer chemischen Nachbehandlung unterzogen werden.

Gegenstand der vorliegenden Erfindung ist somit ein Verfahren zur Herstellung von Siliciumnitridpulver mit einem geringen Kohlenstoffgehalt durch Behandlung von Siliciumnitridpulvers in chlorgashaltiger Atmosphäre, wobei die Behandlung in der chlorgashaltigen Atmosphäre bei Temperaturen von 600 bis 1050°C durchgeführt und eine Behandlung in sauerstoffgashaltiger Atmosphäre angeschlossen wird.

Bevorzugt wird diese Behandlung im Bereich von 800—1050°C durchgeführt.

Dem Chlorgas können als Trägergas Inertgase wie $H_2$, $N_2$, Edelgase oder Mischungen dieser Gase zugesetzt werden. Unter den Bedingungen dieser chlorierenden Nachbehandlung werden selektiv die vorliegenden Silicium-Kohlenstoff-Verbindungen in flüchtiges $SiCl_4$ und elementaren Kohlenstoff übergeführt. Freier Kohlenstoff wird unter den erfindungsgemäßen Bedingungen nicht vom Chlor angegriffen. Der gesamte Kohlenstoff, in Form von freiem Kohlenstoff und aus der Reaktion von Chlor mit den Silicium-Kohlenstoff-Verbindungen gebildeten Kohlenstoff, kann im Anschluß an die Glühung in der chlorgashaltigen Atmosphäre durch Oxidation leicht eliminiert werden.

Die Glühung unter oxidierenden Bedingungen wird in Gegenwart eines gasförmigen Oxidationsmittels wie Luft oder Sauerstoff bei Temperaturen von 500—1000°C, vorzugsweise 600—800°C durchgeführt. Unter diesen Bedingungen wird das $Si_3N_4$-Pulver oxidativ nicht angegriffen, so daß auf diesem Weg eine selektive Reduzierung des Kohlenstoffgehaltes erzielt wird.

Unter den erfindungsgemäßen Bedingungen der chlorierenden Nachbehandlung erfolgt keine Reaktion des Chlors mit dem vorliegenden freien Kohlenstoff, so daß der Chlorbedarf für die Nachbehandlung minimal gehalten werden kann und nur durch den Gehalt an Silicium-Kohlenstoff-Verbindungen im $Si_3N_4$-Pulver bestimmt wird.

Das erfindungsgemäße Verfahren ist besonders vorteilhaft anwendbar, wenn das Siliciumnitridpulver durch Umsetzung von Siliciumdioxid in einer carbothermischen Nitridierung erhalten wurde.

Bei der carbothermischen Nitridierung wird $SiO_2$ mit Kohlenstoff in einer stickstoffhaltigen Atmosphäre bei 1450—1550°C zu $Si_3N_4$ umgesetzt. Unter diesen Bedingungen findet neben der Nitridierung von Silicium auch eine Carburierung unter Bildung von Silicium-Kohlenstoff-Verbindungen statt. Der Gehalt an diesen kohlenstoffhaltigen Verbindungen hängt dabei von Nitridierungsbedingungen und der Qualität der eingesetzten Rohstoffe ab.

Für die Herstellung von $Si_3N_4$-Pulver durch carbothermische Nitridierung von $SiO_2$ ist es vorteilhaft, Kohlenstoff im Überschuß einzusetzen. Der Kohlenstoffüberschuß verbessert die Nitridierungsrate und den Gehalt an $Si_3N_4$ der α-Phase.

Ein auf diese Weise hergestelltes $Si_3N_4$-Pulver enthält deshalb einen großen Anteil von Restkohlenstoff, der anschließend in geeigneter Weise vom $Si_3N_4$-Pulver abgetrennt werden muß. Die Entfernung des Kohlenstoffes nach Maßgabe der japanischen Patentschrift 216 031/83 verbietet sich hier jedoch, da zur Entfernung des Restkohlenstoffes sehr große Mengen an teurem Chlorgas durch Bildung von Kohlenstoff-Chlor-Verbindungen verbraucht würden.

Werden nach dem erfindungsgemäßen Verfahren $Si_3N_4$-Pulver nachbehandelt, die durch carbothermische Nitridierung von $SiO_2$ in Gegenwart eines Kohlenstoffüberschusses hergestellt wurden und damit neben Silicium-Kohlenstoff-Verbindungen auch einen großen Restkohlenstoffgehalt in Form von freiem Kohlenstoff besitzen, so können die bei der Nitridierung erhaltenen Reaktionsmischungen direkt der chlorierenden Nachbehandlung und anschließenden Glühung unter oxidierenden Bedingungen unterworfen werden, ohne daß freier Kohlenstoff chloriert würde und damit sehr hohe Chlorverbräuche resultieren.

Die Nachbehandlungen der $Si_3N_4$-Rohpulver mit den erfindungsgemäßen chlorgashaltigen bzw. sauerstoffhaltigen Atmosphären kann im statischen oder dynamischen Reaktionsbett in geeigneten Öfen durchgeführt werden. Im technischen Maßstab bieten sich natürlich solche Öfen an, in denen durch die ständige Umwälzung des Feststoffes für einen guten Kontakt zwischen Gas und Feststoffoberfläche gesorgt wird. Insbesondere sind hier Drehrohröfen, Wirbelbettöfen oder Schachtöfen zu erwähnen.

Nach dem erfindungsgemäßen Verfahren können auch $Si_3N_4$-Pulver, die durch Direktnitridierung von Silicium hergestellt werden, zu Reduzierung des Kohlenstoffgehaltes nachbehandelt werden. Dabei erfolgt die Nachbehandlung ebenfalls unter den bereits erwähnten Bedingungen einer chlorierenden Behandlung mit anschließender Glühung unter oxidierenden Bedingungen.

Die Erfindung wird durch die folgenden Beispiele näher erläutert, ohne daß darin eine Beschränkung der Erfindung zu sehen ist.

In den folgenden Beispielen wurde der Kohlenstoffgehalt der $Si_3N_4$-Pulver mit einem C-S-mat-Ströhlein durch Verbrennung im Sauerstoffstrom bestimmt.

### Beispiel 1—7

$Si_3N_4$-Pulver, die nach dem Verfahren der carbothermischen Nitridierung aus Quarzmehl und Ruß in einer Stickstoffatmosphäre hergestellt wurden, wurden bei 1000°C und den in der Tabelle 1 angegebenen Reaktionszeiten in einer Chlorgasatmosphäre behandelt. Anschließend wurde der Kohlenstoff durch oxidierende Behandlung bei 800°C an Luft eliminiert.

In der Tabelle 1 sind die analytisch bestimmten Kohlenstoffgehalte der $Si_3N_4$-Rohpulver vor und nach dieser Nachbehandlung angegeben. In den Vergleichsbeispielen 6 B und 7 B wurden die $Si_3N_4$-Pulver nur oxidativ an Luft behandelt, ohne eine Glühung in der Chlorgasatmosphäree.

TABELLE 1

| Beispiel | Kohlenstoff-gehalt des $Si_3N_4$-Rohpul-vers (Gew.-%) | Chlorbehand-lung Zeit (h) | Kohlenstoffge-halt (Gew.-%) des nachbehan-delten $Si_3N_4$-Pulvers |
|---|---|---|---|
| 1 | 6,7 | 1 | 0,32 |
| 2 | 4,3 | 1 | 0,60 |
| 3 | 1,5 | 1 | 0,42 |
| 4 | 1,0 | 2 | 0,40 |
| 5 | 0,9 | 3 | 0,40 |
| 6 A | 1,2 | 4 | 0,40 |
| 6 B Vergleichs-beispiel | 1,2 | — | 0,98 |
| 7 A | 6,7 | 1 | 0,32 |
| 7 B Vergleichs-beispiel | 6,7 | — | 6,10 |

Beispiel 8

$Si_3N_4$-Pulver wurde nach dem Verfahren der carbothermischen Nitridierung von $SiO_2$ mit Kohlenstoff in einer Stickstoffatmosphäre hergestellt. Als $SiO_2$-Rohstoff wurde Quarzfeinstmehl (spezifische Oberfläche BET = 4,5 m²/g) und als Kohlenstoffquelle Ruß (spezifische Oberfläche BET = 20 m²/g) als Trockenmischung eingesetzt. Dabei wurde Ruß im 3fach molaren Überschuß eingesetzt. Die Nitridierung erfolgte 10 Std. bei 1520°C. Das erhaltene Produkt besaß einen Kohlenstoffgehalt von 60 Gew.-%. Diese Mischung wurde bei 1000°C 2 Std. in einer Chlorgasatmosphäre geglüht und anschließend 6 Std. bei 800°C an Luft oxidierend getempert.

Der Kohlenstoffgehalt im $Si_3N_4$-Pulver betrug nach dieser Nachbehandlung 0,40 Gew.-%.

Beispiel 9—15

Verschiedene kommerziell erhältliche $Si_3N_4$-Pulver, nach dem Verfahren der Direktnitridierung von Silicium hergestellt, wurden wie in Beispiel 1, bei 900°C in einer chlorgashaltigen Atmosphäre geglüht und anschließend der elementare Kohlenstoff bei 800°C an Luft oxidativ entfernt.

In der Tabelle 2 sind die Kohlenstoffgehalte für das Ausgangspulver und das nachbehandelte $Si_3N_4$-Pulver angegeben.

4

# EP 0 237 860 B1

TABELLE 2

| Beispiel | $Si_3N_4$-Pulver Handelsbezeichnung | Kohlenstoff im Rohpulver (Gew.-%) | Kohlenstoff im nach-behandelten Pulver (Gew.-%) |
|---|---|---|---|
| 9 | ®H 2 [1] | 0,31 | 0,11 |
| 10 | ®LC 1 [1] | 0,16 | 0,02 |
| 11 | ®LC 12 [1] | 0,13 | 0,02 |
| 12 | Denka SN—9FW [2] | 0,20 | 0,04 |
| 13 | Denka SN—B [2] | 0,18 | 0,06 |
| 14 | Kema P 75 L [3] | 0,29 | 0,09 |
| 14a | Kema P 75 L [3] | 0,29 | 0,27 |
| 15 | Kema P 95 H [3] | 0,28 | 0,11 |
| 15a | Kema P 95 H [3] | 0,28 | 0,25 |

In den Vergleichsbeispielen 14a, 15a wurden die $Si_3N_4$-Pulver ohne Chlorbehandlung nur an Luft geglüht.

1) Handelsprodukte der Fa. H.C. Starck, Berlin.
2) Handelsprodukte der Fa. Denka Denki Kagaku Kogyo, Japan
3) Handelsprodukte der Fa. KemaNord Industrikemi, Schweden

**Patentansprüche**

1. Verfahren zur Herstellung von Siliciumnitridpulver mit einem geringen Kohlenstoffgehalt durch Behandlung von Siliciumnitridpulver in chlorgashaltiger Atmosphäre, dadurch gekennzeichnet, daß die Behandlung in der chlorgashaltigen Atmosphäre bei Temperaturen von 600 bis 1050°C durchgeführt und eine Behandlung in sauerstoffgashaltiger Atmosphäre angeschlossen wird.

2. Verfahren gemäß Anspruch 1, dadurch gekennzeichnet, daß die Behandlung in der chlorgashaltigen Atmosphäre bei Temperaturen von 800 bis 1050°C durchgeführt wird.

3. Verfahren gemäß Anspruch 1 oder 2, dadurch gekennzeichnet, daß die Behandlung in der sauerstoffgashaltigen Atmosphäre bei Temperaturen von 500 bis 1000°C, vorzugsweise 600 bis 800°C, durchgeführt wird.

4. Verfahren gemäß einem oder mehrerer der Ansprüche 1 bis 3, dadurch gekennzeichnet, daß das Siliciumnitridpulver durch Umsetzung von Siliciumdioxid in einer carbothermischen Nitridierung erhalten wurde.

5. Verfahren gemäß einem oder mehrerer der Ansprüche 1 bis 3, dadurch gekennzeichnet, daß das Siliciumnitridpulver durch Direktnitridierung von Silicium erhalten wurde.

**Revendications**

1. Procédé de production d'une poudre de nitrure de silicium ayant une faible teneur en carbone, par traitement d'une poudre de nitrure de silicium dans une atmosphère contenant du chlore gazeux, caractérisé en ce que le traitement dans l'atmosphère contenant du chlore gazeux est conduit à des températures de 600 à 1050°C et est suivi d'un traitement dans une atmosphère contenant de l'oxygène gazeux.

2. Procédé suivant la revendication 1, caractérisé en ce que le traitement dans l'atmosphère contenant du chlore gazeux est conduit à des températures de 800 à 1050°C.

3. Procédé suivant la revendication 1 ou 2, caractérisé en ce que le traitement dans l'atmosphère contenant de l'oxygène gazeux est conduit à des températures de 500 à 1000°C, de préférence de 600 à 800°C.

4. Procédé suivant une ou plusieurs des revendications 1 à 3, caractérisé en ce que la poudre de nitrure de silicium a été obtenue par réaction de dioxyde de silicium dans une nitruration carbothermique.

5. Procédé suivant une ou plusieurs des revendications 1 à 3, caractérisé en ce que la poudre de nitrure de silicium a été obtenue par nitruration directe de silicium.

**Claims**

1. A process for the production of silicon nitride powder having a low carbon content by treatment of silicon nitride powder in an atmosphere containing chlorine gas, characterized in that the treatment in the atmosphere containing chlorine gas is carried out at temperatures in the range from 600 to 1050°C and is followed by treatment in an atmosphere containing oxygen gas.

2. A process as claimed in claim 1, characterized in that the treatment in the atmosphere containing chlorine gas is carried out at temperatures in the range from 800 to 1050°C.

3. A process as claimed in claim 1 or 2, characterized in that the treatment in the atmosphere containing oxygen gas is carried out at temperatures in the range from 500 to 1000°C and preferably at temperatures in the range from 600 to 800°C.

4. A process as claimed in one or more of claims 1 to 3, characterized in that the silicon nitride powder was obtained by reaction of silicon dioxide in a carbothermal nitriding process.

5. A process as claimed in one or more of claims 1 to 3, characterized in that the silicon nitride powder was obtained by direct nitriding of silicon.